# FASCICULE DE BREVET EUROPEEN

(11) **EP 0 788 923 B1**
(45) Date de publication et mention de la délivrance du brevet: **11.08.1999**
(21) Numéro de dépôt: 97400099.4
(22) Date de dépôt: 17.01.1997
(51) Int. Cl.: B60N 2/22

(54) **Mécanisme de verrouillage pour siège de véhicule, et siège comportant un tel mécanisme**
Fahrzeugsitzverriegelung und Sitz mit einem solchen Mechanismus
Vehicle seat latch and seat comprising such mechanism

(30) Priorité: 22.01.1996 FR 9600660
(43) Date de publication de la demande: 13.08.1997
(73) Titulaire: BERTRAND FAURE EQUIPEMENTS S.A., 92100 Boulogne (FR)
(72) Inventeur: Ganot, Denis, 61100 Flers (FR)
(74) Mandataire: Burbaud, Eric

(56) Documents cités:
- EP-A- 0 502 774
- EP-A- 0 691 238
- DE-A- 4 441 159
- US-A- 4 143 905
- US-A- 5 163 736

## Description

La présente invention concerne les mécanismes de verrouillage pour sièges de véhicules, notamment automobiles, ainsi que les sièges de véhicules équipés de tels mécanismes.

Plus particulièrement, l'invention est relative aux mécanismes de verrouillage destinés à équiper des sièges de véhicules qui comprennent une assise et un dossier pivotant par rapport à l'assise autour d'un axe de pivotement transversal, ces mécanismes comportant :
- des premier et deuxième flasques qui sont destinés à être solidarisés l'un avec l'assise du siège et l'autre avec le dossier du siège et qui sont montés pivotants l'un par rapport à l'autre autour de l'axe de pivotement,
- des moyens de blocage pour immobiliser les premier et deuxième flasques l'un par rapport à l'autre,
- et des moyens d'actionnement sensibles à au moins un choc prédéterminé avant ou arrière susceptible d'être subi par le véhicule, ces moyens d'actionnement étant prévus pour commander le blocage relatif des premier et deuxième flasques par les moyens de blocage lorsque se produit le choc prédéterminé susmentionné.

Les mécanismes de verrouillage du genre en question complètent et renforcent les mécanismes d'articulation qui sont habituellement prévus pour régler l'inclinaison du dossier, afin d'assurer une résistance supplémentaire en cas de choc à l'arrière ou à l'avant du véhicule.

Le document FR-A-2 565 801 décrit un exemple d'un tel mécanisme de verrouillage.

Le mécanisme de verrouillage décrit dans ce document est prévu non seulement pour bloquer les deux flasques l'un par rapport à l'autre lorsque le véhicule subit un choc prédéterminé, mais également pour absorber une partie de l'énergie mécanique de ce choc, de sorte que ce mécanisme de verrouillage est relativement complexe et coûteux.

La présente invention a notamment pour but de pallier ces inconvénients.

A cet effet, selon l'invention, un mécanisme de verrouillage du genre en question est caractérisé en ce que les moyens de blocage comportent :
- une denture solidaire du deuxième flasque, cette denture s'étendant sur au moins un arc de cercle centré sur l'axe de pivotement et étant orientée radialement vers l'intérieur,
- au moins un grain pourvu d'une denture extérieure, propre à coopérer avec la denture du deuxième flasque, ce grain étant guidé en coulissement selon une direction radiale, par un guide solidaire du premier flasque, entre d'une part une position d'engagement où le grain coopère avec la denture du deuxième flasque pour bloquer l'articulation, et d'autre part une position effacée où il ne coopère pas avec la denture du deuxième flasque,
- et une came de verrouillage qui commande le coulissement du grain et qui est elle-même commandée par lesdits moyens d'actionnement, la came de verrouillage étant normalement dans une position de repos où elle permet au grain de coulisser vers sa position effacée, et les moyens d'actionnement étant prévus pour déplacer la came de verrouillage dans une position de blocage où elle place le grain dans sa position d'engagement, lorsque se produit le choc prédéterminé susmentionné.

Le système à grain et denture utilisé par ce mécanisme de verrouillage est similaire au système à grain et denture utilisé dans certains mécanismes d'articulation de siège très répandus, qui permettent à l'utilisateur de débloquer le pivotement du dossier du siège afin d'en régler l'inclinaison.

Par conséquent, non seulement le mécanisme de verrouillage selon l'invention est d'une conception simple et parfaitement maîtrisée, mais encore, il peut le cas échéant être fabriqué au moins en partie en utilisant le même outillage que celui utilisé habituellement pour fabriquer les mécanismes d'articulation susmentionnés, ce qui tend encore à diminuer son coût.

Dans des modes de réalisation préférés, on a recours en outre à l'une et/ou à l'autre des dispositions suivantes :
- en l'absence du choc prédéterminé susmentionné, la came de verrouillage est maintenue dans sa position de repos par des moyens élastiques ;
- la came de verrouillage est montée rotative autour de l'axe de pivotement, cette came de verrouillage présentant des première et deuxième surfaces de came qui sont aptes à coopérer avec le grain lorsque la came de verrouillage est déplacée angulairement de sa position de repos dans n'importe quel sens angulaire, pour placer ledit grain dans sa position d'engagement ;
- la came de verrouillage est montée rotative autour de l'axe de pivotement, les moyens élastiques qui maintiennent cette came de verrouillage dans sa position de repos comportant un fil métallique élastique qui s'étend entre deux extrémités fixées respectivement à ladite came de verrouillage de part et d'autre du grain, ce fil métallique élastique présentant une portion centrale qui appuie radialement vers l'intérieur sur une partie saillante appartenant au grain, en maintenant ce grain dans sa position effacée tant que la came de verrouillage est dans sa position de repos ;
- le mécanisme constitue également un mécanisme d'articulation pour le réglage de l'inclinaison du dossier et comporte en outre :
   . une came dite de réglage pour commander le coulissement du grain, cette came de réglage étant maintenue par des moyens élastiques dans une position de repos où elle place le grain dans sa position d'engagement,
   . et un organe de commande pour déplacer la came de réglage de sa position de repos vers une position d'actionnement où elle permet au grain de coulisser vers sa position effacée ; ces dispositions sont particulièrement avantageuses dans la mesure où elles permettent d'intégrer un mécanisme de réglage d'inclinaison du dossier dans le même ensemble que le mécanisme de verrouillage, le grain et la denture intérieure correspondante servant à la fois à verrouiller le dossier en cas de choc et, en l'absence de choc, à maintenir le dossier dans la position réglée par l'utilisateur ;
- les cames de verrouillage et de réglage sont montées rotatives indépendamment l'une de l'autre autour de l'axe de pivotement dans deux plans voisins, le grain comportant d'une part un corps principal qui est situé dans le plan de la came de réglage et qui inclut la denture extérieure du grain, et d'autre part une partie saillante qui est située dans le plan de la came de verrouillage et qui coopère avec cette came de verrouillage ;
- les moyens élastiques qui maintiennent la came de verrouillage dans sa position de repos comportent un fil métallique élastique qui s'étend entre deux extrémités fixées respectivement à ladite came de verrouillage de part et d'autre de la partie saillante du grain, ce fil métallique élastique présentant une portion centrale qui appuie radialement vers l'intérieur sur la partie saillante du grain en sollicitant ce grain vers sa position effacée, avec une force inférieure à la sollicitation appliquée audit grain sous l'effet des moyens élastiques qui agissent sur la came de réglage ;
- la portion centrale du fil métallique élastique comporte une partie en forme de bosse qui fait saillie radialement vers l'extérieur et qui est en engagement radial contre la partie saillante du grain en suivant partiellement le contour de cette partie saillante ;
- le grain présente deux faces de butée opposées qui s'étendent depuis le voisinage de la denture de ce grain jusqu'à un épaulement disposé à l'opposé de ladite denture du grain et situé près de cette denture, au moins les faces de butée du grain présentant une grande résistance mécanique, le guide comportant deux faces de contre-butée qui sont disposées respectivement en regard des deux faces de butée et de leurs épaulement et qui présentent une résistance mécanique inférieure à la résistance des faces de butée, et lorsque le grain est dans sa position d'engagement, les faces de butée et de contre-butée en regard sont en contact mutuel sur une surface suffisamment faible pour qu'une des faces de butée du grain pénètre alors dans la face de contre-butée correspondante du guide lorsque l'un des flasque subit un couple de pivotement autour de l'axe de rotation qui est supérieur à un couple minimum prédéterminé ;
- le couple minimum prédéterminé est compris entre 50 mdaN et 200 mdaN.

L'invention a également pour objet un siège de véhicule comprenant une assise et un dossier pivotant par rapport à l'assise autour d'un axe de pivotement transversal, ce siège étant équipé d'un mécanisme de verrouillage tel que défini ci-dessus.

Dans des modes de réalisation préférés de ce siège, on a recours en outre à l'une et/ou à l'autre des dispositions suivantes :
- la came de verrouillage est montée rotative par rapport à l'axe de pivotement, les moyens d'actionnement de cette came de verrouillage comportant une masselotte qui est reliée à ladite came de verrouillage par l'intermédiaire d'un bras de levier et qui est décalée verticalement par rapport à l'axe de pivotement ;
- les moyens d'actionnement de la came de verrouillage comprennent un dispositif pyrotechnique qui, lors dudit choc prédéterminé, est apte à déplacer très rapidement un organe d'actionnement relié à la came de verrouillage, pour placer cette came de verrouillage dans sa position de blocage ;
- les moyens d'actionnement de la came de verrouillage comportent un lien souple qui s'étend transversalement dans le dossier entre une première extrémité fixe et une deuxième extrémité mobile en liaison avec ladite came de verrouillage, ce lien souple étant disposé pour être sollicité en tension lorsqu'un occupant du siège s'enfonce dans le dossier, ledit lien souple sollicitant alors la came de verrouillage vers sa position de blocage.

D'autres caractéristiques et avantages de l'invention apparaîtront au cours de la description détaillée suivante de plusieurs de ses formes de réalisation, données à titre d'exemples non limitatifs, en regard des dessins joints.

Sur les dessins :
- la figure 1 est une vue schématique d'un siège de véhicule équipé d'un mécanisme de verrouillage selon une première forme de réalisation de l'invention,
- la figure 2 est une vue en coupe partielle du mécanisme de verrouillage équipant le siège de la figure 1, la coupe étant prise dans un plan radial selon la ligne II-II de la figure 4,
- la figure 3 est une autre vue en coupe du mécanisme de la figure 2, la coupe étant également prise dans un plan radial, selon la ligne III-III de la figure 4,
- la figure 4 est une vue en coupe axiale selon la ligne IV-IV des figures 2 et 3,
- la figure 5 est une vue en coupe selon la ligne V-V de la figure 2,
- les figures 6 à 8 sont des vues schématiques partielles en perspective, en partie écorchées, qui illustrent trois modes d'actionnement possibles du mécanisme des figures 2 à 5,
- la figure 9 est une vue en coupe d'un mécanisme de verrouillage selon une deuxième forme de réalisation de l'invention, la coupe étant prise selon la ligne IX-IX de la figure 10 avec un arrachement partiel au niveau d'un des grains ;
- la figure 10 est une vue en coupe selon la ligne X-X de la figure 9 ;
- et les figures 11 à 13 représentent des modes particuliers d'application du mécanisme de verrouillage des figures 9 et 10.

Sur les différentes figures, les mêmes références désignent des éléments identiques ou similaires.

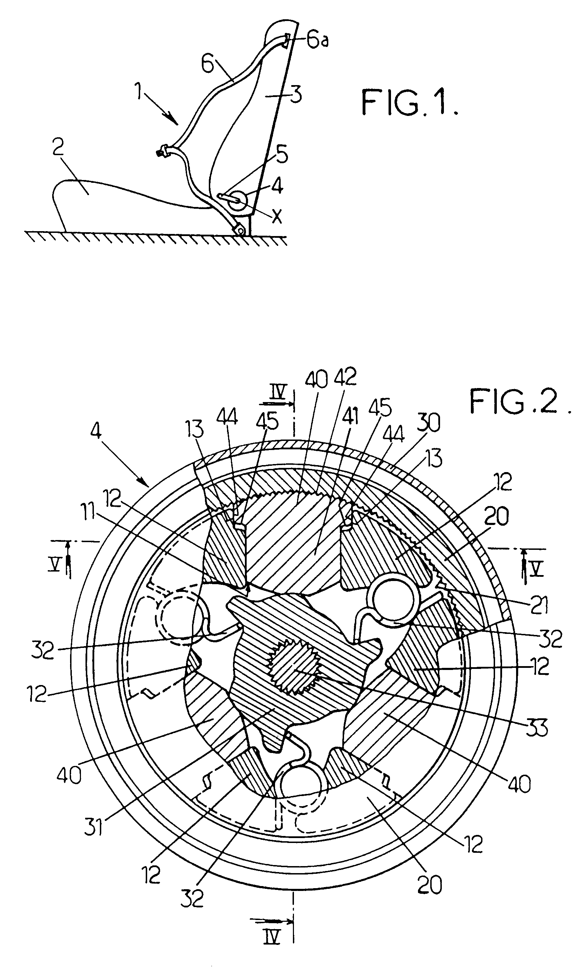

La figure 1 représente un siège 1 de véhicule, notamment un siège avant de véhicule automobile. Ce siège comporte une assise 2 et un dossier 3 monté pivotant sur l'assise 2 selon un axe transversal X, au moyen d'un mécanisme d'articulation 4 qui permet de régler l'inclinaison du dossier et qui se verrouille en cas de choc subi par le véhicule.

Lorsqu'un utilisateur du siège 1 veut régler l'inclinaison du dossier 3, il actionne une manette 5 ou un autre organe de commande pour débloquer l'articulation 4, puis il procède au réglage de l'inclinaison voulue en agissant directement sur le dossier 3, après quoi il relâche la manette 5, ce qui bloque à nouveau l'articulation 4.

Le siège peut éventuellement comporter une articulation 4 similaire sur chacun de ses côtés, les deux articulations étant alors de préférence commandées par la même manette 5.

Eventuellement, le siège 1 peut également comporter une ceinture de sécurité 6 dite "embarquée", qui est en liaison mécanique avec la partie supérieure du dossier 3 du siège. Cette liaison mécanique consiste généralement en un montage coulissant de la ceinture 6 dans une ouverture 6a ménagée sur un côté du dossier 3, la ceinture 6 se prolongeant au-delà de cette ouverture 6a à l'intérieur du dossier 3, jusqu'à un enrouleur (non représenté).

L'articulation 4 est représentée plus en détail sur les figures 2 à 5.

Cette articulation comprend, de façon connue en soi (voir un mécanisme similaire dans le document FR-A-2 578 602) :
- un flasque métallique 10 dit fixe, qui est solidarisé avec l'armature 2a de l'assise 2 du siège,
- un flasque métallique 20 dit mobile, qui est solidarisé avec l'armature 3a du dossier 3 du siège et qui pivote autour de l'axe de rotation X de ce dossier, les flasques fixe et mobile formant ensemble un boîtier rond, et le flasque mobile 20 comportant une denture circulaire 21 orientée radialement vers l'intérieur et disposée à l'intérieur du boîtier,
- une couronne de tôle métallique 30 qui est sertie sur le pourtour du flasque fixe 10 et qui recouvre partiellement le flasque mobile 20 pour fermer le boîtier et maintenir les deux flasques l'un contre l'autre,
- trois grains métalliques 40, disposés à l'intérieur du boîtier et présentant chacun un corps principal 41 pourvu d'une denture extérieure 42 propre à coopérer avec la denture intérieure 21 du flasque mobile 20, ces trois grains étant guidés en coulissement radial dans des rainures de guidage 11 ménagées entre des bossages 12 qui appartiennent au flasque fixe et qui font saillie à l'intérieur du boîtier,
- une première came 31, rotative autour de l'axe X, cette came 31 étant une plaque métallique disposée dans le même plan radial que les grains 40, la première came 31 étant déplaçable angulairement entre d'une part une position de repos où elle repousse les grains vers une position d'engagement dans laquelle les dentures extérieures 42 de ces grains coopèrent avec la denture intérieure 21 du flasque mobile pour immobiliser ledit flasque mobile, et d'autre part une position d'actionnement où ladite première came permet aux grains 40 de reculer vers une position effacée dans laquelle leurs dentures extérieures ne coopèrent plus avec la denture intérieure du flasque mobile,
- trois ressorts métalliques 32 qui sollicitent la première came vers sa position de repos,
- et un arbre 33 lié à la manette 5, cet arbre s'étendant longitudinalement selon l'axe X et étant solidaire de la première came 31.

Ainsi, lorsqu'un utilisateur actionne la manette 5 en faisant tourner la première came 31 vers sa position d'actionnement, les grains 40 sont libres de reculer vers leur position effacée, ce qui permet la rotation du flasque mobile 20, donc le réglage de l'inclinaison du dossier du siège.

Lorsque l'utilisateur relâche la manette 5, la première came revient dans sa position de repos sous l'action des ressorts 32, ce qui ramène les grains 40 dans leur position d'engagement. Les grains bloquent alors la rotation du flasque mobile 20 et du dossier 3.

Selon l'invention, l'articulation 4 comporte en outre, dans un plan radial voisin du plan de la première came 31, une deuxième came 50 interne au boîtier.

Cette deuxième came est rotative autour de l'axe X indépendamment de la première came 31, et elle coopère avec des parties saillantes 43 des grains 40.

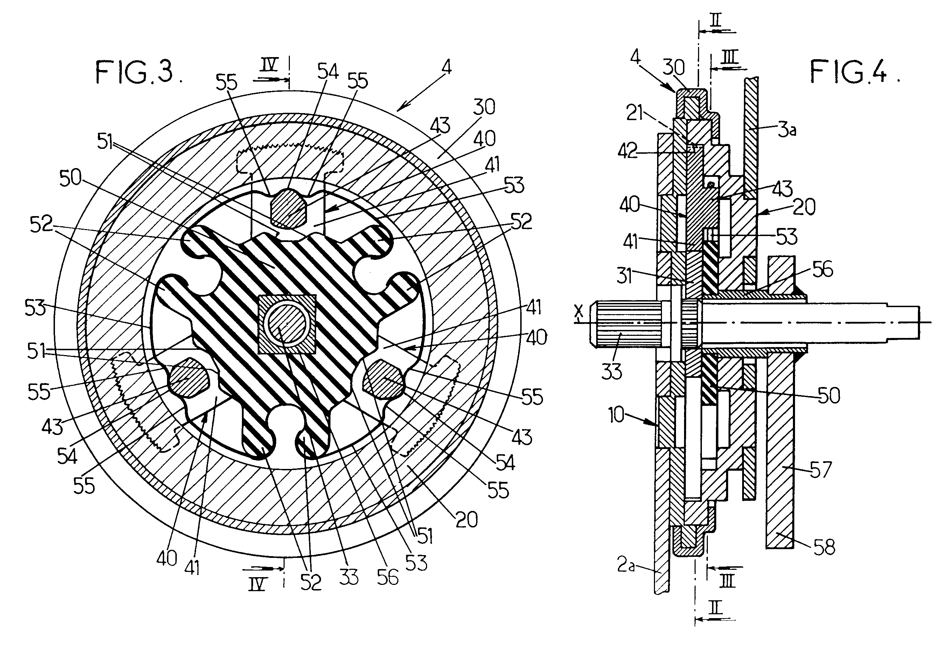

La deuxième came 50 est une plaque métallique qui comporte, au niveau de chaque partie saillante 43, deux surfaces de came 51 propres à repousser ladite partie saillante radialement vers l'extérieur en plaçant le grain 40 correspondant dans sa position d'engagement lorsque ladite deuxième came 50 est déplacée angulairement dans un sens ou dans l'autre à partir de la position de repos représentée sur la figure 3.

Par ailleurs, la deuxième came comporte, de part et d'autre de chaque grain 40, deux doigts 52 qui s'étendent sensiblement radialement vers l'extérieur et auxquels sont fixées les deux extrémités d'un fil métallique élastique 53 qui enserre élastiquement les deux doigts 52.

Chacun des trois fils métalliques élastiques 53 s'étend sensiblement en arc de cercle entre ses deux extrémités, en passant radialement à l'extérieur de la partie saillante 43 d'un des grains 40.

La portion centrale de ce fil présente une bosse 54 qui fait saillie radialement vers l'extérieur et qui suit une partie du contour de la partie saillante 43 du grain correspondant, en appuyant radialement vers l'intérieur sur cette partie saillante 43, et cette bosse 54 étant entourée par deux bosses 55 faisant saillie radialement vers l'intérieur.

Ainsi, les fils métalliques élastiques tendent à retenir élastiquement la deuxième came 50 dans sa position de repos et ils sollicitent en outre les grains 40 vers leur position effacée, avec une force inférieure à la sollicitation appliquée auxdits grains 40 par la première came 31 sous l'effet des ressorts 32, lorsque cette première came est en position de repos.

Par ailleurs, la deuxième came 50 est solidaire d'un arbre 56, qui dans l'exemple représenté est creux et entoure l'arbre 33.

Cet arbre creux est lui-même solidaire d'un bras de levier 57 dont la rotation est commandée par des moyens d'actionnement sensibles à un choc avant ou à un choc arrière qui pourrait être subi par le véhicule.

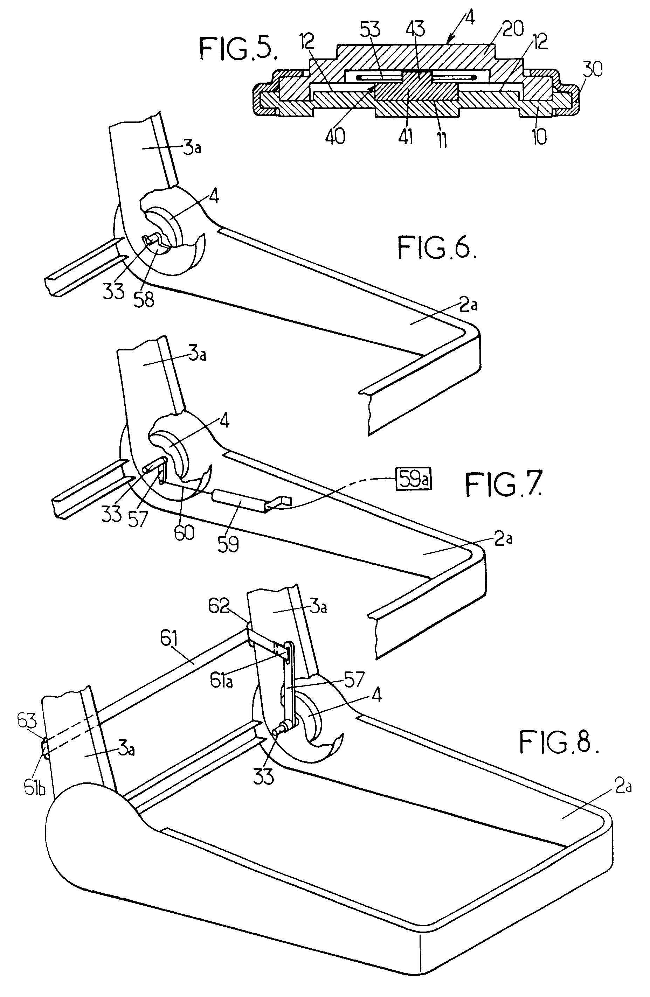

Comme représenté plus clairement sur la figure 6, ces moyens d'actionnement peuvent être constitués par une masselotte 58 qui est fixée à l'extrémité du bras de levier 57, lequel bras de levier 57 s'étend alors de préférence sensiblement verticalement vers le bas à partir de l'arbre creux 56, lorsque l'articulation est montée sur le siège.

Ainsi, lorsque le véhicule subit un choc avant ou arrière suffisamment important, la masselotte 58 entraîne le bras de levier 57 et la deuxième came 50 en rotation, de sorte que les parties saillantes 43 des différents grains sont sollicitées radialement vers l'extérieur, chacune par une surface de came 51 de la deuxième came 50.

Par conséquent, si l'occupant du siège était en train de régler l'inclinaison du dossier au moment du choc, la deuxième came 50 replace les grains 40 en position d'engagement, en bloquant ainsi l'articulation 4.

De plus, même si l'occupant du siège n'était pas en train de régler l'inclinaison du dossier au moment du choc, on remarquera que la deuxième came 50 contribue à éviter que les grains 40 ne se dégagent de la denture 21 au moment du choc.

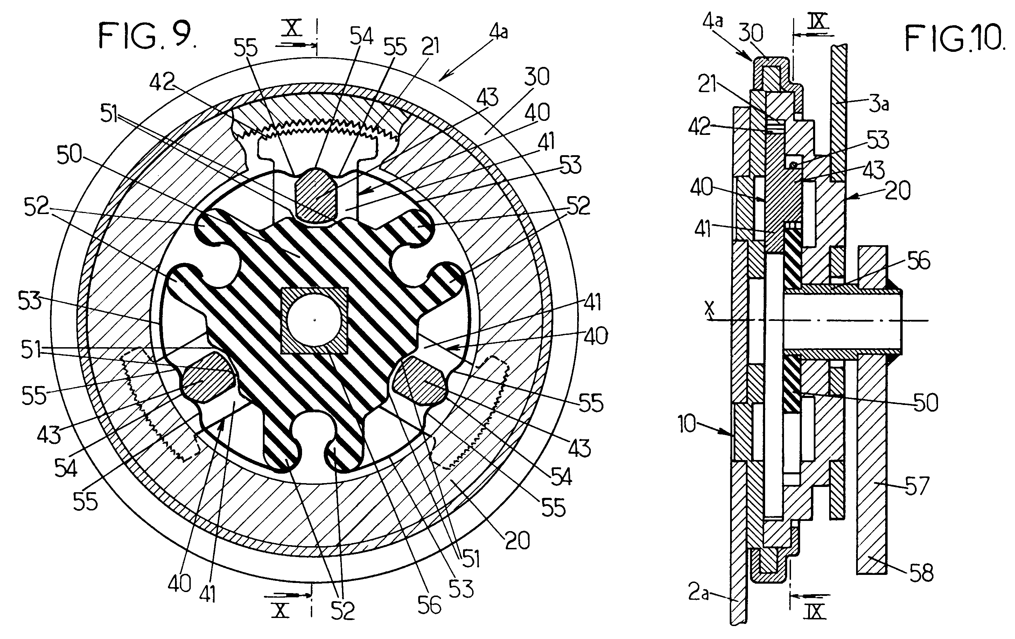

Le mode d'application de l'invention qui est représenté sur la figure 7 diffère simplement de la forme de réalisation des figures 1 à 6 par le fait que le bras de levier 57 ne comporte pas de masselotte 58, mais est relié à un dispositif pyrotechnique 59 par l'intermédiaire d'un câble ou d'une tringle 60, le dispositif pyrotechnique étant solidaire de l'armature 2a de l'assise du siège.

Le dispositif pyrotechnique 59 peut être constitué, par exemple, par un prétensionneur utilisé habituellement pour mettre en tension une ceinture de sécurité de véhicule automobile lors d'un choc. Les documents FR-A-2 706 544 et FR-A-2 716 423 décrivent des exemples de tels prétensionneurs utilisables dans le cadre de la présente invention.

Le dispositif pyrotechnique 59 est relié à un capteur de choc 59a qui, lorsque le véhicule subit un choc suffisamment violent, et notamment un choc avant ou un choc arrière, déclenche la mise à feu dudit dispositif 59, lequel exerce alors en une fraction de seconde une forte traction sur le câble 60, de sorte que l'articulation 4 est bloquée par rotation du bras de levier 57 et de la deuxième came 50.

Enfin, le mode d'application de l'invention qui est représenté sur la figure 8 diffère simplement de la forme de réalisation des figures 1 à 6 par le fait que le bras de levier 57 s'étend vers le haut au lieu de s'étendre vers le bas et ne comporte pas de masselotte 58, mais est fixé à une extrémité mobile 61a d'une sangle 61.

A partir de son extrémité mobile 61a, la sangle s'étend vers l'arrière jusqu'à une boucle de renvoi 62 qui est solidaire d'un premier montant latéral de l'armature 3a du dossier, puis la sangle 61 s'étend en travers du dossier sensiblement horizontalement, jusqu'à une extrémité fixe 61a solidaire d'un point de fixation 63 sur le deuxième montant latéral de l'armature 3a du dossier.

Lorsque l'occupant du siège s'appuie sur le dossier et en particulier lorsque cet occupant a tendance à s'enfoncer dans le dossier sous l'effet d'un choc arrière subi par le véhicule, la sangle 61 est mise en traction, de sorte que son extrémité mobile 61a a tendance à tirer à l'extrémité supérieure du levier 57.

Par conséquent, lorsque le véhicule subit un choc arrière suffisamment violent, la sangle 61 provoque un déplacement angulaire du bras de levier 57 et de la deuxième came 50, ce qui bloque l'articulation 4.

Le mécanisme 4a représenté sur les figures 9 et 10 est uniquement destiné à assurer une résistance supplémentaire pour retenir le dossier 3 du siège lorsque le véhicule subit un choc avant ou arrière suffisamment important.

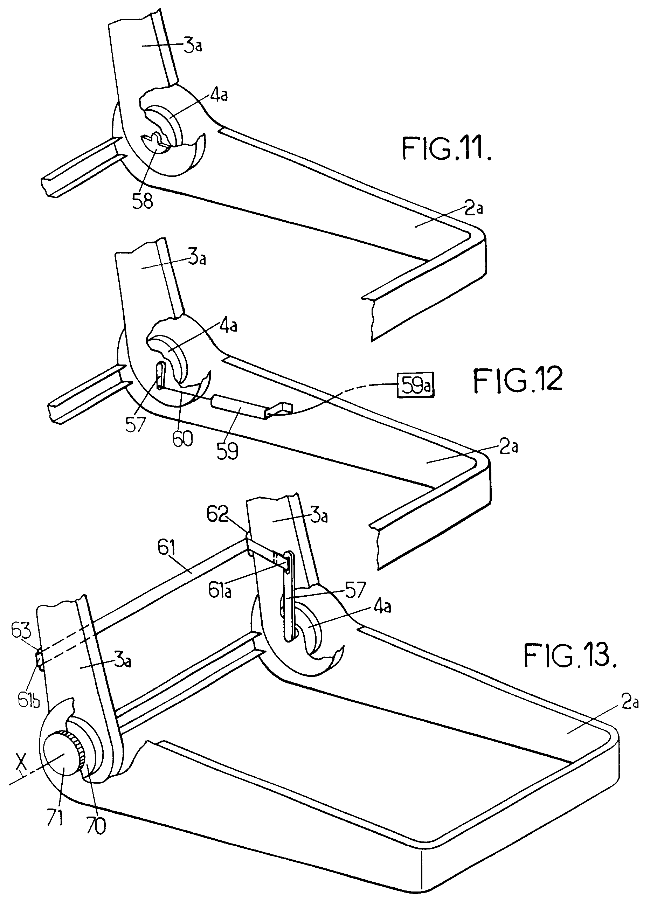

Le mécanisme de verrouillage 4a est donc toujours associé à un mécanisme d'articulation 70 (voir figure 13) qui permet de régler l'inclinaison du dossier 3 par rapport à l'assise 2.

Ce mécanisme d'articulation peut commander positivement le pivotement du dossier 3 sous l'action d'une molette de commande manuelle 71 ou éventuellement sous l'action d'un moteur électrique de réglage (non représenté). Un exemple d'un tel mécanisme d'articulation est donné, entre autres, dans le document EP-A-0 505 229.

Par ailleurs, le mécanisme d'articulation 70 peut également être du type servant uniquement à bloquer ou débloquer le pivotement du dossier 3 par rapport à l'assise en fonction de l'actionnement d'une manette de commande. Un exemple d'un tel mécanisme d'articulation est donné, entre autres, dans le document FR-A-2 578 602.

De préférence, le mécanisme d'articulation 70 est disposé d'un côté du siège et le mécanisme de verrouillage 4a est disposé de l'autre côté du siège, mais il serait bien entendu possible que le mécanisme d'articulation 70 et le mécanisme de verrouillage 4a soient disposés tous les deux du même côté du siège, ou encore de prévoir deux mécanismes de verrouillage 4a, un du côté du mécanisme d'articulation 70 et un sur le côté opposé du siège.

Par ailleurs, le siège pourrait également comporter un mécanisme de verrouillage 4a d'un côté, et de l'autre côté, un mécanisme d'articulation 4 tel que décrit précédemment.

Comme on peut le voir sur les figures 9 et 10, le mécanisme de verrouillage 4a se distingue uniquement du mécanisme d'articulation 4 décrit précédemment par le fait qu'il ne comporte pas la première came 31, les ressorts 32 et l'arbre de commande 33, de sorte que les grains 40 du mécanisme de verrouillage sont normalement maintenus dans leur position effacée par les fils métalliques élastiques 53.

Les grains 40 sont repoussés dans leur position d'engagement par la deuxième came 50 lorsque le véhicule subit un choc avant ou arrière suffisamment fort.

La came 50 est commandée par des moyens d'actionnement qui peuvent comprendre par exemple une masselotte 58 (figure 11), un dispositif pyrotechnique 59 (figure 12), ou une sangle 61 passant transversalement dans le dossier du siège (figure 13), ces différents moyens d'actionnement ayant déjà été décrits ci-dessus pour le mécanisme d'articulation 4.

De préférence, comme enseigné dans la demande de brevet français numéro 95 00206 (FR-A-2 729 108, correspondant à EP-A-0 720 930 et publiée le 12 juillet 1996, c'est-à-dire après la date de priorité de la présente demande), au contenu de lapnelle il est peut être fait référence, chaque grain 40 présente deux faces de butée 44 qui s'étendent depuis le voisinage de la denture 42 du grain jusqu'à un épaulement 45 disposé à l'opposé de ladite denture du grain et situé près de cette denture.

Les faces de butée 44 présentent une grande résistance mécanique, et le guide 11 comporte, respectivement en regard des faces de butée 44, deux faces de contre-butée 13 qui présentent une résistance mécanique inférieure à la résistance des faces de butée 44.

Lorsque le grain 40 est dans sa position d'engagement, les faces de butée 44 et de contre-butée 13 en regard sont en contact mutuel sur une surface suffisamment faible pour qu'une des faces de butée 45 du grain pénètre dans la face de contre-butée 13 correspondante du guide lorsque le dossier 3 du siège subit un couple de pivotement suffisant autour de l'axe de rotation X.

Les grains 40 restent donc bloqués dans leur position d'engagement, quelle que soit la violence du choc subi par le véhicule.

Le couple minimum à partir duquel les faces de butée 44 des grains pénètrent dans les faces de contre-butée 13 peut être par exemple compris entre 50 mdaN et 200 mdaN, éventuellement entre 100 mdaN et 200 mdaN.

## Revendications

1. Mécanisme de verrouillage destiné à équiper un siège de véhicule (1) qui comprend une assise (2) et un dossier (3) pivotant par rapport à l'assise autour d'un axe de pivotement (X) transversal, ce mécanisme comportant :
- des premier et deuxième flasques (10, 20) qui sont destinés à être solidarisés l'un avec l'assise (2) du siège et l'autre avec le dossier (3) du siège et qui sont montés pivotants l'un par rapport à l'autre autour de l'axe de pivotement (X),
- des moyens de blocage (40, 50) pour immobiliser les premier et deuxième flasques l'un par rapport à l'autre,
- et des moyens d'actionnement (58; 59; 61) sensibles à au moins un choc prédéterminé avant ou arrière susceptible d'être subi par le véhicule, ces moyens d'actionnement étant prévus pour commander le blocage relatif des premier et deuxième flasques par les moyens de blocage lorsque se produit le choc prédéterminé susmentionné,
**caractérisé en ce** que les moyens de blocage comportent :
- une denture (21) solidaire du deuxième flasque (20), cette denture s'étendant sur au moins un arc de cercle centré sur l'axe de pivotement (X) et étant orientée radialement vers l'intérieur,
- au moins un grain (40) pourvu d'une denture extérieure (42), propre à coopérer avec la denture (21) du deuxième flasque, ce grain étant guidé en coulissement selon une direction radiale, par un guide (11) solidaire du premier flasque, entre d'une part une position d'engagement où le grain (40) coopère avec la denture (21) du deuxième flasque pour bloquer l'articulation, et d'autre part une position effacée où il ne coopère pas avec la denture du deuxième flasque,
- et une came de verrouillage (50) qui commande le coulissement du grain (40) et qui est elle-même commandée par lesdits moyens d'actionnement (58; 59; 61), la came de verrouillage (50) étant normalement dans une position de repos où elle permet au grain (40) de coulisser vers sa position effacée, et les moyens d'actionnement étant prévus pour déplacer la came de verrouillage dans une position de blocage où elle place le grain dans sa position d'engagement, lorsque se produit le choc prédéterminé susmentionné.

2. Mécanisme selon la revendication 1, dans lequel, en l'absence du choc prédéterminé susmentionné, la came de verrouillage (50) est maintenue dans sa position de repos par des moyens élastiques (53).

3. Mécanisme selon l'une quelconque des revendications 1 et 2, dans lequel la came de verrouillage (50) est montée rotative autour de l'axe de pivotement (X), cette came de verrouillage présentant des première et deuxième surfaces de came (51) qui sont aptes à coopérer avec le grain (40) lorsque la came de verrouillage est déplacée angulairement de sa position de repos dans n'importe quel sens angulaire, pour placer ledit grain dans sa position d'engagement.

4. Mécanisme selon l'une des revendications précédentes, dans lequel la came de verrouillage (50) est montée rotative autour de l'axe de pivotement (X), les moyens élastiques qui maintiennent cette came de verrouillage dans sa position de repos comportant un fil métallique élastique (53) qui s'étend entre deux extrémités fixées respectivement à ladite came de verrouillage de part et d'autre du grain (40), ce fil métallique élastique présentant une portion centrale (54) qui appuie radialement vers l'intérieur sur une partie saillante (43) appartenant au grain, en maintenant ce grain dans sa position effacée tant que la came de verrouillage (50) est dans sa position de repos.

5. Mécanisme selon l'une quelconque des revendications 1 à 3, comportant en outre :
- une came (31) dite de réglage pour commander le coulissement du grain (40), cette came de réglage étant maintenue par des moyens élastiques (32) dans une position de repos où elle place le grain dans sa position d'engagement,
- et un organe de commande (33) pour déplacer la came de réglage de sa position de repos vers une position d'actionnement où elle permet au grain de coulisser vers sa position effacée.

6. Mécanisme selon la revendication 5, dans lequel les cames de verrouillage et de réglage (31, 50) sont montées rotatives indépendamment l'une de l'autre autour de l'axe de pivotement (X) dans deux plans voisins, le grain (40) comportant d'une part un corps principal (41) qui est situé dans le plan de la came de réglage (31) et qui inclut la denture extérieure (42) du grain, et d'autre part une partie saillante (43) qui est située dans le plan de la came de verrouillage (50) et qui coopère avec cette came de verrouillage.

7. Mécanisme selon la revendication 6, dans lequel les moyens élastiques qui maintiennent la came de verrouillage (50) dans sa position de repos comportent un fil métallique élastique (53) qui s'étend entre deux extrémités fixées respectivement à ladite came de verrouillage de part et d'autre de la partie saillante (43) du grain, ce fil métallique élastique présentant une portion centrale (54) qui appuie radialement vers l'intérieur sur la partie saillante (43) du grain en sollicitant ce grain vers sa position effacée, avec une force inférieure à la sollicitation appliquée audit grain sous l'effet des moyens élastiques (32) qui agissent sur la came de réglage (31).

8. Mécanisme selon l'une quelconque des revendications 4 et 7, dans lequel la portion centrale du fil métallique élastique comporte une partie en forme de bosse (54) qui fait saillie radialement vers l'extérieur et qui est en engagement radial contre la partie saillante (43) du grain en suivant partiellement le contour de cette partie saillante.

9. Mécanisme selon l'une quelconque des revendications précédentes, dans lequel le grain (40) présente deux faces de butée (44) opposées qui s'étendent depuis le voisinage de la denture (41) de ce grain jusqu'à un épaulement (45) disposé à l'opposé de ladite denture du grain et situé près de cette denture, au moins les faces de butée (44) du grain présentant une grande résistance mécanique, le guide (11) comportant deux faces de contre-butée (13) qui sont disposées respectivement en regard des deux faces de butée (44) et de leurs épaulement (45) et qui présentent une résistance mécanique inférieure à la résistance des faces de butée (44),
et dans lequel, lorsque le grain (40) est dans sa position d'engagement, les faces de butée (44) et de contre-butée (13) en regard sont en contact mutuel sur une surface suffisamment faible pour qu'une des faces de butée (44) du grain pénètre alors dans la face de contre-butée (13) correspondante du guide lorsque l'un des flasques (10, 20) subit un couple de pivotement autour de l'axe de rotation (X) qui est supérieur à un couple minimum prédéterminé.

10. Mécanisme selon la revendication 9, dans lequel le couple minimum prédéterminé est compris entre 50 mdaN et 200 mdaN.

11. Siège de véhicule (1) comprenant une assise (2) et un dossier (3) pivotant par rapport à l'assise autour d'un axe de pivotement transversal (X), ce siège étant équipé d'un mécanisme de verrouillage (4, 4a) selon l'une quelconque des revendications précédentes.

12. Siège selon la revendication 11, dans lequel la came de verrouillage (50) est montée rotative par rapport à l'axe de pivotement (X), les moyens d'actionnement de cette came de verrouillage comportant une masselotte (58) qui est reliée à ladite deuxième came par l'intermédiaire d'un bras de levier (57) et qui est décalée verticalement par rapport à l'axe de pivotement (X).

13. Siège selon la revendication 11, dans lequel les moyens d'actionnement de la came de verrouillage (50) comprennent un dispositif pyrotechnique (59) qui, lors dudit choc prédéterminé, est apte à déplacer très rapidement un organe d'actionnement (60) relié à la came de verrouillage (50), pour placer cette came de verrouillage dans sa position de blocage.

14. Siège selon la revendication 11, dans lequel les moyens d'actionnement de la came de verrouillage (50) comportent un lien souple (61) qui s'étend transversalement dans le dossier (3) entre une première extrémité fixe (61b) et une deuxième extrémité mobile (61a) en liaison avec ladite came de verrouillage (50), ce lien souple étant disposé pour être sollicité en tension lorsqu'un occupant du siège s'enfonce dans ledit dossier, le lien souple sollicitant alors la came de verrouillage vers sa position de blocage.

## Claims

1. A locking mechanism for fitting to a vehicle seat (1) comprising a seat proper (2) and a seat back (3) pivotally mounted relative to the seat proper about a transverse pivot axis (X), the mechanism comprising:
. first and second cheek plates (10, 20), one for securing to the seat proper (2) and the other for securing to the seat back (3), which cheek plates are pivotally mounted relative to each other about the pivot axis (X);
. locking means (40, 50) for locking the first and second cheek plates relative to each other; and
. actuator means (58; 59; 61) responsive at least to a predetermined front or back impact to which the vehicle may be subject, said actuator means being provided to lock the first and second cheek plates relative to each other via the locking means in the event of the above-mentioned predetermined impact occurring;
**the mechanism being characterized in that** the locking means comprise:
. a set of teeth (21) secured to the second cheek plate (20), said set of teeth extending over at least an arc of a circle centered on the pivot axis (X) and being directed radially inwards;
. at least one slug (40) provided with an outwardly-directed set of teeth (42) suitable for co-operating with the set of teeth of the second cheek plate, said slug being guided by a guide (11) secured to the first cheek plate to slide in a radial direction between an engaged position in which the slug (40) co-operates with the set of teeth (21) of the second cheek plate to lock the hinge and a retracted position in which it does not cooperate with the teeth of the second cheek plate; and
. a locking cam (50) which controls sliding of the slug (40) and which is itself controlled by said actuator means (59; 59; 61), the locking cam (50) normally being in a rest position where it enables the slug (40) to slide towards its retracted position, and the actuator means being provided to displace the locking cam into a locking position in which it places the slug in its engaged position in the event of the above-mentioned predetermined impact occurring.

2. A mechanism according to claim 1, in which, in the absence of the above-mentioned predetermined impact, the locking cam (50) is held in its rest position by resilient means (53).

3. A mechanism according to claim 1 or 2, in which the locking cam (50) is mounted to rotate about the pivot axis (X), said locking cam having first and second camming surfaces (51) suitable for co-operating with the slug (40) in the event of the locking cam being displaced angularly in either direction from its rest position, so as to place said slug in its engaged position.

4. A mechanism according to any preceding claim, in which the locking cam (50) is mounted to rotate about the pivot axis (X), the resilient means which hold said locking cam in its rest position including a resilient metal wire (53) which extends between two ends fixed to said locking cam respectively on either side of the slug (40), said resilient metal wire having a central portion (54) which bears radially inwards on a projecting portion (43) of the slug, holding said slug in its retracted position so long as the locking cam (50) is in its rest position.

5. A mechanism according to any one of claims 1 to 3, further including:
. an "adjustment" cam (31) for controlling sliding of the slug (40), said adjustment cam being held by resilient means (32) in a rest position where it puts the slug in its engaged position; and
. a control member (33) for moving the adjustment cam from its rest position to an actuated position in which it enables the slug to slide towards its retracted position.

6. A mechanism according to claim 5, in which the locking and adjustment cams (31, 50) are mounted to rotate independently of each other about the pivot axis (X) in two adjacent planes, the slug (40) including both a main body (41) situated in the same plane as the adjustment cam (31) and including the outwardly-directed teeth (42) of the slug, and a projecting portion (43) situated in the plane of the locking cam (50) and co-operating with said locking cam.

7. A mechanism according to claim 6, in which the resilient means which hold the locking cam (50) in its rest position include a resilient metal wire (53) which extends between two ends fixed to said locking cam respectively on either side of the projecting portion (43) of the slug, said resilient metal wire having a central portion (54) which bears radially inwards on the projecting portion (43) of the slug, urging said slug towards its retracted position with a force that is lower than the urging applied to said slug under the effect of the resilient means (32) that act on the adjustment cam (31).

8. A mechanism according to claim 4 or 7, in which the central portion of the resilient metal wire includes a projecting portion (54) which projects radially outwards and which is engaged radially against the projecting portion (43) of the slug, lying over a portion of the outline of said projecting portion of the slug.

9. A mechanism according to any preceding claim, in which the slug (40) has two opposite abutment faces (44) extending from the vicinity of the teeth (41) of said slug to a shoulder (45) disposed facing away from the teeth of the slug and situated close to said teeth, at least the abutment faces (44) of the slug presenting high strength, the guide (11) including two counterabutment faces (13) respectively disposed facing the two abutment faces (44) and their shoulders (45) and having strength lower than the strength of the abutment faces (44); and
in which, when the slug (40) is in its engaged position, the facing abutment and counter-abutment faces (44, 13) are in mutual contact over an area that is small enough for one of the abutment faces (44) then to penetrate into the corresponding counter-abutment face (13) of the guide when one of the cheek plates (10, 20) is subjected to pivoting torque about the axis of rotation (X) exceeding a predetermined minimum torque.

10. A mechanism according to claim 9, in which the predetermined minimum torque lies in the range 50 mdaN and 200 mdaN.

11. A vehicle seat (1) comprising a seat proper (2) and a seat back (3) mounted to pivot relative to the seat proper about a transverse pivot axis (X), said seat being fitted with a locking mechanism (4, 4a) according to any preceding claim.

12. A seat according to claim 11, in which the locking cam (50) is mounted to rotate relative to the pivot axis (X), the means for actuating said locking cam including a fly weight (58) which is connected to said second cam via a lever arm (57) and which is offset vertically relative to the pivot axis (X).

13. A seat according to claim 11, in which the means for actuating the locking cam (50) comprise a pyrotechnic device (59) which, in the event of said predetermined impact, is suitable for displacing very quickly an actuator member (60) connected to the locking cam (50) in order to place said locking cam in its locking position.

14. A seat according to claim 11, in which the means for actuating the locking cam (50) comprise a flexible link (61) extending transversely inside the seat back (3) between a fixed first end (61b) and a moving second end (61a) connected to said locking cam (50), said flexible link being organized to be subjected to tension in the event of an occupant of the seat being pressed into said seat back, said flexible link then urging the locking cam towards its locking position.

## Patentansprüche

1. Verriegelungsmechanismus, der dazu vorgesehen ist, einen Fahrzeugsitz (1) auszurüsten, der eine Sitzfläche (2) und eine Rückenlehne (3) umfaßt, die bezüglich der Sitzfläche um eine transversale Drehachse (X) drehbar ist, wobei dieser Mechanismus umfaßt:
- einen ersten und einen zweiten Flansch (10, 20), die vorgesehen sind, jeweils fest mit der Sitzfläche (2) des Sitzes bzw. der Rückenlehne (3) des Sitzes verbunden zu werden, und die drehbar um die Drehachse (X) zueinander montiert sind,
- Blockierungsvorrichtungen (40, 50) zum Blockieren von erstem und zweitem Flansch zueinander,
- und Steuerungsvorrichtungen (58; 59; 61), die zumindest auf einem vorbestimmten Stoß reagieren, dem das Fahrzeug vorne oder hinten möglicherweise ausgesetzt ist, wobei diese Steuerungsvorrichtungen vorgesehen sind, die Blockierung des ersten und zweiten Flansches zueinander durch Blockierungsvorrichtungen zu steuern, wenn es zu dem vorgenannten vorbestimmten Stoß kommt,
dadurch gekennzeichnet, daß die Blockierungsvorrichtungen umfassen:
- eine Zahnung (21), die fest mit dem zweiten Flansch (20) verbunden ist, wobei sich diese Zahnung über mindestens einen Kreisbogen erstreckt, der auf die Drehachse (X) zentriert und radial nach innen ausgerichtet ist,
- mindestens ein Paßstück (40) mit einer äußeren Zahnung (42), das geeignet ist, mit der Zahnung (21) des zweiten Flansches zusammenzuwirken, wobei dieses Paßstück in seiner Gleitbewegung in einer Radialrichtung von einer fest mit dem ersten Flansch verbundenen Führung (11) zwischen einerseits einer Eingriffsposition geführt wird, in der das Paßstück (40) mit der Zahnung (21) des zweiten Flansches zusammenwirkt, um das Gelenk zu blockieren, und andererseits einer versenkten Position, in der es nicht mit der Zahnung des zweiten Flansches zusammenwirkt,
- und einen Verriegelungsnocken (50), der das Gleiten des Paßstücks (40) steuert und selbst von den Steuerungsvorrichtungen (58; 59; 61) gesteuert wird, wobei sich der Verriegelungsnocken (50) normalerweise in einer Ruheposition befindet, in der er dem Paßstück (40) das Gleiten in seine versenkte Position ermöglicht, und die Steuerungsvorrichtungen so vorgesehen sind, daß sie den Verriegelungsnocken in eine Blockierungsposition bewegen, in der er das Paßstück in seine Eingriffsposition bringt, wenn der vorgenannte vorbestimmte Stoß stattfindet.

2. Mechanismus nach Anspruch 1, bei dem der Verriegelungsnocken (50), wenn kein vorgenannter vorbestimmter Stoß erfolgt, durch elastische Vorrichtungen (53) in seiner Ruheposition gehalten wird.

3. Mechanismus nach einem der Ansprüche 1 und 2, bei dem der Verriegelungsnocken (50) drehbar um die Drehachse (X) montiert ist, wobei dieser Verriegelungsnocken eine erste und eine zweite Nockenfläche (51) aufweist, die geeignet sind, mit dem Paßstück (40) zusammenzuwirken, wenn der Verriegelungsnocken winklig aus seiner Ruheposition in einer beliebigen Winkelrichtung bewegt wird, um das Paßstück in seine Eingriffsposition zu bringen.

4. Mechanismus nach einem der vorstehenden Ansprüche, bei dem der Verriegelungsnocken (50) drehbar um die Drehachse (X) montiert ist, wobei die elastischen Vorrichtungen, die diesen Verriegelungsnocken in seiner Ruheposition halten, einen elastischen Metalldraht (53) aufweisen, der sich zwischen zwei Enden erstreckt, die an dem Verriegelungsnocken jeweils beidseits des Paßstücks (40) befestigt sind, wobei dieser elastische Metalldraht einen Mittelbereich (54) aufweist, der nach innen hin radial auf einem hervorstehenden Stück (43) ruht, das zum Paßstück gehört, und dabei dieses Paßstück in seiner versenkten Position hält, solange sich der Verriegelungsnocken (50) in seiner Ruheposition befindet.

5. Mechanismus nach einem der Ansprüche 1 bis 3, der ferner umfaßt:
- einen sogenannten Regulierungsnocken (31), der die Gleitbewegung des Paßstücks (40) steuert, wobei dieser Regulierungsnocken durch elastische Vorrichtungen (32) in einer Ruheposition gehalten wird, in der er das Paßstück in seine Eingriffsposition bringt,
- und eine Steuervorrichtung (33) zum Bewegen des Verriegelungsnockens aus seiner Ruheposition in Richtung auf eine Steuerungsposition, in der er dem Paßstück das Gleiten in seine versenkte Position ermöglicht.

6. Mechanismus nach Anspruch 5, bei dem der Verriegelungs- und der Regulierungsnocken (31, 50) auf zwei benachbarten Ebenen unabhängig voneinander drehbar um die Drehachse (X) montiert sind, wobei das Paßstück (40) einerseits einen Hauptkörper (41) umfaßt, der sich auf der Ebene des Regulierungsnockens (31) befindet und die äußere Zahnung (42) des Paßstücks einschließt, und andererseits einen hervorstehenden Bereich (43), der auf der Ebene des Verriegelungsnockens (50) angeordnet ist und mit diesem Verriegelungsnocken zusammenwirkt.

7. Mechanismus nach Anspruch 6, bei dem die elastischen Vorrichtungen, die den Verriegelungsnocken (50) in seiner Ruhestellung halten, einen elastischen Metalldraht (53) umfassen, der sich zwischen zwei Enden erstreckt, die an dem Verriegelungsnocken jeweils beidseits des hervorstehenden Bereichs (43) des Paßstücks befestigt sind, wobei dieser elastische Metalldraht einen Mittelabschnitt (54) aufweist, der radial nach innen an den hervorstehenden Bereich (43) des Paßstücks anliegt und dieses Paßstück dabei in Richtung auf seine versenkte Position zieht, und zwar mit einer Kraft, die kleiner ist als die Beanspruchung, der das Paßstück unter der Wirkung der elastischen Vorrichtungen (32) ausgesetzt ist, die auf den Regulierungsnocken (31) wirken.

8. Mechanismus nach einem der Ansprüche 4 und 7, bei dem der Mittelabschnitt des elastischen Metalldrahts einen beulenförmigen Bereich (54) aufweist, der nach außen hin radial hervorsteht und in radialem Eingriff mit dem hervorstehenden Bereich (43) des Paßstücks steht und sich teilweise den Umrissen dieses hervorstehenden Bereichs anpaßt.

9. Mechanismus nach einem der vorstehenden Ansprüche, bei dem das Paßstück (40) zwei einander gegenüberliegende Anschlagseiten (44) aufweist, die sich aus der Nähe der Zahnung (41) dieses Paßstücks aus bis zu einem Vorsprung (45) hin erstrecken, der gegenüber der Zahnung des Paßstücks angeordnet ist und sich nahe dieser Zahnung befindet, wobei zumindest die Anschlagseiten (44) des Paßstücks eine hohe mechanische Festigkeit aufweisen, wobei die Führung (11) zwei Gegenanschlagseiten (13) umfaßt, die jeweils gegenüber den beiden Anschlagseiten (44) und ihren Vorsprüngen (45) angeordnet sind und eine geringere mechanische Festigkeit als die Anschlagseiten (44) aufweisen, und bei dem die Anschlagseiten (44) und die gegenüberliegenden Gegenanschlagseiten (13), wenn sich das Paßstück (40) in seiner Eingriffsposition befindet, auf einer Fläche in gegenseitigem Kontakt sind, die klein genug ist, damit eine der Anschlagseiten (44) des Paßstücks dann in die entsprechende Gegenanschlagseite (13) der Führung hineinreicht, wenn auf einen der Flansche (10, 20) ein Drehmoment um die Drehachse (X) ausgeübt wird, das größer als ein vorbestimmtes Mindestmoment ist.

10. Mechanismus nach Anspruch 9, bei dem das vorbestimmte Mindestmoment 50 bis 200 mdaN beträgt.

11. Fahrzeugsitz (1) mit einer Sitzfläche (2) und einer Rückenlehne (3), die bezüglich der Sitzfläche um eine transversale Drehachse (X) drehbar ist, wobei dieser Sitz mit einem Verriegelungsmechanismus (4, 4a) nach einem der vorstehenden Ansprüche ausgestattet ist.

12. Sitz nach Anspruch 11, bei dem der Verriegelungsnocken (50) bezüglich der Drehachse (X) drehbar montiert ist, wobei die Steuerungsvorrichtungen für diesen Verriegelungsnocken ein Gewicht (58) umfassen, das mit dem zweiten Nocken über einen Hebelarm (57) verbunden ist, und der bezüglich der Drehachse (X) vertikal verschoben ist.

13. Sitz nach Anspruch 11, bei dem die Steuerungsvorrichtungen für den Verriegelungsnocken (50) eine pyrotechnische Vorrichtung (59) umfassen, die im Falle eines vorbestimmten Stoßes geeignet ist, sehr schnell eine mit dem Verriegelungsnocken (50) verbundene Steuerungsvorrichtung (60) zu bewegen, um diesen Verriegelungsnocken in seine Blockierungsposition zu bringen.

14. Sitz nach Anspruch 11, bei dem die Steuerungsvorrichtungen für den Verriegelungsnocken (50) ein elastisches Band (61) umfassen, das sich quer in der Rückenlehne (3) zwischen einem ersten, festen Ende (61b) und einem zweiten, beweglichen Ende (61a) erstreckt, das mit dem Verriegelungsnocken (50) in Verbindung steht, wobei dieses elastische Band so angeordnet ist, daß es gespannt wird, wenn ein Benutzer des Sitzes sich in diese Rückenlehne hineindrückt, wobei das elastische Band den Verriegelungsnocken dann in Richtung auf seine Blockierungsposition zieht.
